# EUROPEAN PATENT APPLICATION

(11) **EP 3 089 376 A1**
(43) Date of publication of application: **02.11.2016**
(21) Application number: 15189801.2
(22) Date of filing: 14.10.2015
(51) Int. Cl.: H04B 5/00, H02J 5/00, H02J 7/02, H02J 50/12

(54) **HANGING-TYPE FLEXIBLE WIRELESS CHARGING DEVICE**

(30) Priority: 30.04.2015 TW 104113889; 02.06.2015 TW 104117865
(71) Applicant: JTOUCH Corporation, Taoyuan County 32063 (TW)
(72) Inventor: YEH, Yu-Chou, 32063 Jhongli City, Taoyuan County (TW); YEH, Tsung-Her, 32063 Jhongli City, Taoyuan County (TW); WU, Chen-Chi, 32063 Jhongli City, Taoyuan County (TW); YEH, Chun-Ting, 32063 Jhongli City, Taoyuan County (TW); HUANG, Hsueh-Jung, 32063 Jhongli City, Taoyuan County (TW); CHENG, Bo-Ruei, 32063 Jhongli City, Taoyuan County (TW); HU, Chih-Ming, 32063 Jhongli City, Taoyuan County (TW); TSUI, Chiu-Cheng, 32063 Jhongli City, Taoyuan County (TW)
(74) Representative: 2K Patentanwälte Blasberg Kewitz & Reichel

(57) **Abstract**

A wireless charging device (3) includes a flexible carrier member (30), at least one thin-film transmitter coil assembly (31) and a hanging element (33). The flexible carrier member (30) includes a main carrier part (301) and at least one sub-carrier part (302). The at least one sub-carrier part (302) is connected with the main carrier part (301), so that at least one pocket (303) is defined by the main carrier part (301) and the at least one sub-carrier part (302) collaboratively. Each pocket (303) has an entrance (304) and an accommodation space (305). The at least one thin-film transmitter coil assembly (31) is disposed within the main carrier part (301), and emits an electromagnetic wave with at least one specified frequency for wirelessly charging at least one power-receiving device (4, 4') within the accommodation space (305) of the pocket (303). The hanging element (33) is connected with the main carrier part (301). The flexible carrier member (30) is hung on an object through the hanging element (33).

## Description

### FIELD OF THE INVENTION

The present invention relates to a wireless charging device, and more particularly to a hanging-type flexible wireless charging device.

### BACKGROUND OF THE INVENTION

Nowadays, various portable electronic devices such as mobile phones or tablet computers are widely used in our daily lives. For providing electric energy to the portable electronic device, a charging device is used to charge a built-in battery of the portable electronic device. Generally, the charging devices are classified into wired charging devices and wireless charging devices. Since the wireless charging device can be operated in various environments and not restricted by the power cable, the wired charging device is gradually replaced by the wireless charging device.

The wireless charging operation is also referred as an inductive charging operation or a non-contact charging operation. By the wireless charging technology, electric energy is transmitted from a power-providing device to a power-receiving device in a wireless transmission manner. Generally, three wireless power charging groups include WPC (Wireless Power Consortium) (QI), PMA (Power Matters Alliance) and A4WP (Alliance for Wireless Power). The WPC and A4WP standards are the mainstreams of the wireless charging technologies. The wireless charging technologies comprise a magnetic induction technology (low frequency) and a magnetic resonance technology (high frequency). The magnetic induction technology is only applied to short-distance energy transmission. The power conversion efficiency of the magnetic induction technology is higher. However, since the power-receiving device should be aligned with and attached on the power-providing device according to the magnetic induction technology, the power-providing device cannot charge plural power-receiving devices simultaneously. By the magnetic resonance technology, the energy transmission between a transmitter terminal and a receiver terminal is implemented at a specified resonant frequency. Consequently, the magnetic resonance technology can be applied to the longer-distance energy transmission when compared with the magnetic induction technology.

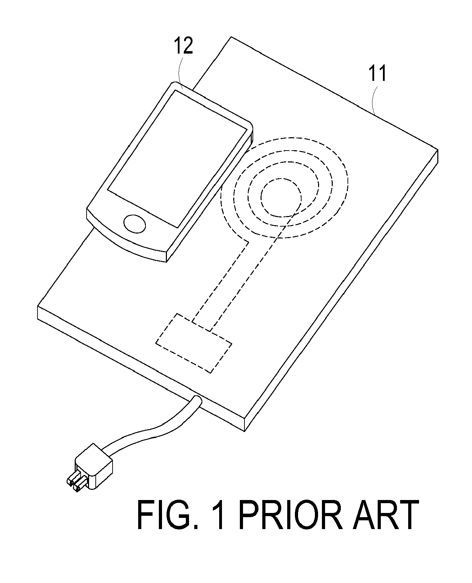

FIG. 1 schematically illustrates the use of a wireless charging device to wirelessly charge a power-receiving device according to the prior art. As shown in FIG. 1, the wireless charging device 11 transmits electric energy to the power-receiving device 12 in a wireless transmission manner. Generally, a coil assembly of the wireless charging device 11 is made of a multi-core copper wire. Moreover, after the copper wire is mounted on a rigid substrate which is made of ferrite magnetic oxide, the coil assembly is produced. The coil assembly is installed with a casing. In other words, the shape of the wireless charging device cannot be changed according to the practical requirements and the operating environments, and the wireless charging device is usually placed on a desk (or a flat surface) to charge the power-receiving device. Consequently, the applications of the wireless charging device are restricted. Moreover, it is difficult to store and carry the wireless charging device. Especially when the wireless charging device is used for wirelessly charging a larger-surface power-receiving device, the volume and weight of the wireless charging device are increased. Under this circumstance, it is difficult to carry the wireless charging device. Moreover, the current wireless charging devices are operated by different technologies. Consequently, the coupling frequencies of the coil assemblies and the transmitter terminal circuits are usually different. Under this circumstance, the components of the wireless charging devices and the components of the power-receiving devices are incompatible. Due to the incompatibility, the coil assemblies and the circuitry components of different wireless charging devices are usually different. Consequently, the wireless charging device is customized according to the type of the portable electronic device. Under this circumstance, the applications of the wireless charging device are restricted. Moreover, the wireless charging device is unable to wirelessly charge plural power-receiving devices which are designed according to different wireless charging technologies.

### SUMMARY OF THE INVENTION

An object of the present invention provides a hanging-type flexible wireless charging device with a flexible and slim structure. The hanging-type flexible wireless charging device can perform a wireless charging operation according to magnetic resonance and/or magnetic induction. The hanging-type flexible wireless charging device can be mounted in a hanging manner. Moreover, the hanging-type flexible wireless charging device can be easily stored and carried. Consequently, the wireless charging application and convenience are enhanced, and the layout space is saved.

Another object of the present invention provides a hanging-type flexible wireless charging device capable of emitting an electromagnetic wave with one or more frequencies so as to wirelessly charge one or plural power-receiving devices at the same time or at different times. Moreover, the hanging-type flexible wireless charging device can adaptively or selectively charge the at least one power-receiving device according to magnetic resonance or magnetic induction.

In accordance with an aspect of the present invention, there is provided a wireless charging device. The wireless charging device includes a flexible carrier member, at least one thin-film transmitter coil assembly and a hanging element. The flexible carrier member includes a main carrier part and at least one sub-carrier part. The at least one sub-carrier part is connected with the main carrier part, so that at least one pocket is defined by the main carrier part and the at least one sub-carrier part collaboratively. Each pocket has an entrance and an accommodation space. The at least one thin-film transmitter coil assembly is disposed within the main carrier part, and emits an electromagnetic wave with at least one specified frequency for wirelessly charging at least one power-receiving device within the accommodation space of the pocket. The hanging element is connected with the main carrier part. The flexible carrier member is hung on an object through the hanging element. In an embodiment, both of the main carrier and the sub-carrier include shielding structure for blocking divergence of the electromagnetic wave and enhancing charging efficiency.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the use of a wireless charging device to wirelessly charge a power-receiving device according to the prior art;
FIG. 2A schematically illustrates the architecture of a wireless charging system according to an embodiment of the present invention;
FIG. 2B schematically illustrates a variant example of the architecture of the wireless charging system of FIG. 2A;
FIG. 3A is a schematic perspective view illustrating the appearance of a hanging-type flexible wireless charging device according to an embodiment of the present invention;
FIG. 3B is a schematic perspective view illustrating the appearance of a hanging-type flexible wireless charging device according to another embodiment of the present invention;
FIG. 4 is a schematic cross-sectional view illustrating the hanging-type flexible wireless charging device of FIG. 3A and taken along the line AA;
FIG. 5A is a schematic exploded view illustrating an exemplary thin-film transmitter coil assembly of the hanging-type flexible wireless charging device of FIG. 4;
FIG. 5B is a schematic exploded view illustrating another exemplary thin-film transmitter coil assembly of the hanging-type flexible wireless charging device of FIG. 4;
FIG. 6 schematically illustrates an example of the shielding structure of the wireless charging device as shown in FIG. 5A;
FIG. 7 is a schematic circuit block diagram illustrating a transmitter module of the hanging-type flexible wireless charging device of FIG. 3A;
FIG. 8 is a schematic circuit block diagram illustrating a receiver module of the power-receiving device of FIGS. 2A and 2B;
FIG. 9 is a schematic perspective view illustrating the appearance of a power-receiving device of FIGS. 2A and 2B;
FIG. 10 is a schematic circuit block diagram illustrating the architecture of the wireless charging system according to another embodiment of the present invention;
FIG. 11 is a schematic circuit block diagram illustrating an exemplary configuration of the antennas of the hanging-type flexible wireless charging device of FIG. 3A;
FIG. 12 is a schematic circuit block diagram illustrating another exemplary configuration of the antennas of the hanging-type flexible wireless charging device of FIG. 3A; and
FIG. 13 is a schematic circuit block diagram illustrating a further exemplary configuration of the antennas of the hanging-type flexible wireless charging device of FIG. 3A.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

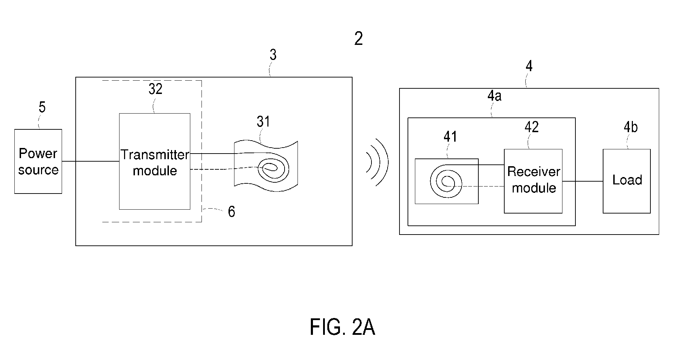

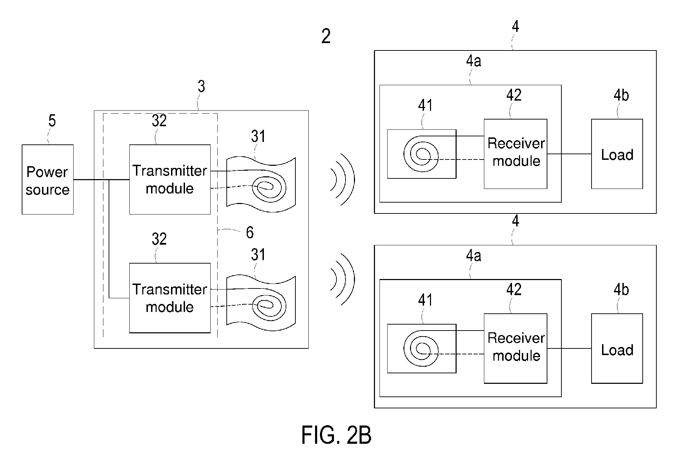

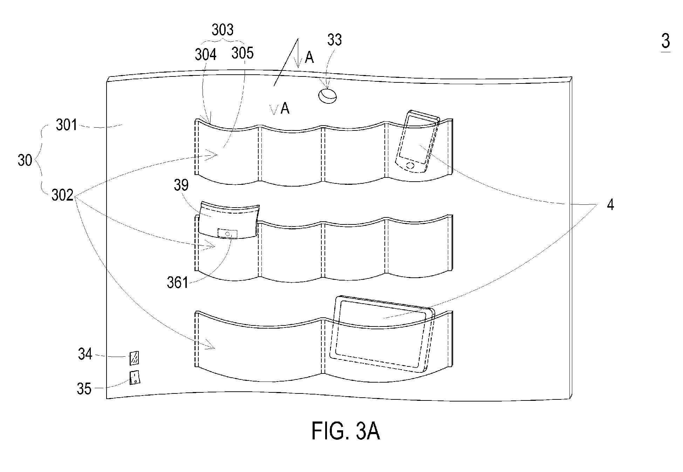

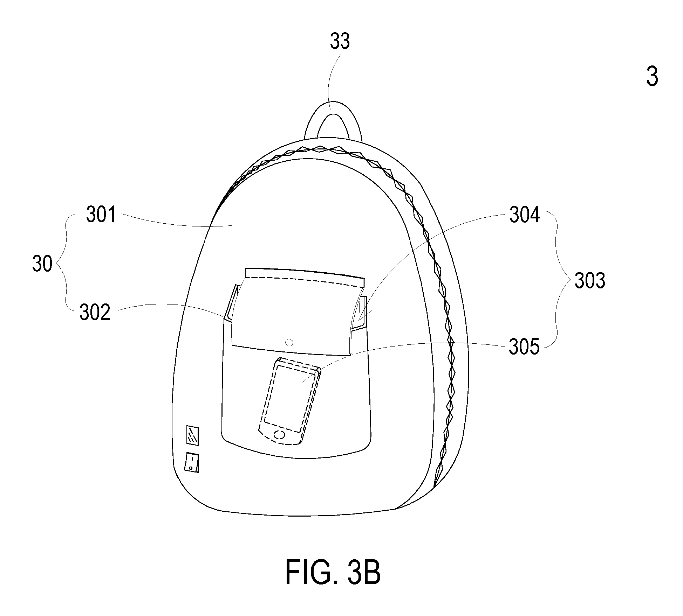

FIG. 2A schematically illustrates the architecture of a wireless charging system according to an embodiment of the present invention. FIG. 2B schematically illustrates a variant example of the architecture of the wireless charging system of FIG. 2A. FIG. 3A is a schematic perspective view illustrating the appearance of a hanging-type flexible wireless charging device according to an embodiment of the present invention. FIG. 3B is a schematic perspective view illustrating the appearance of a hanging-type flexible wireless charging device according to another embodiment of the present invention.

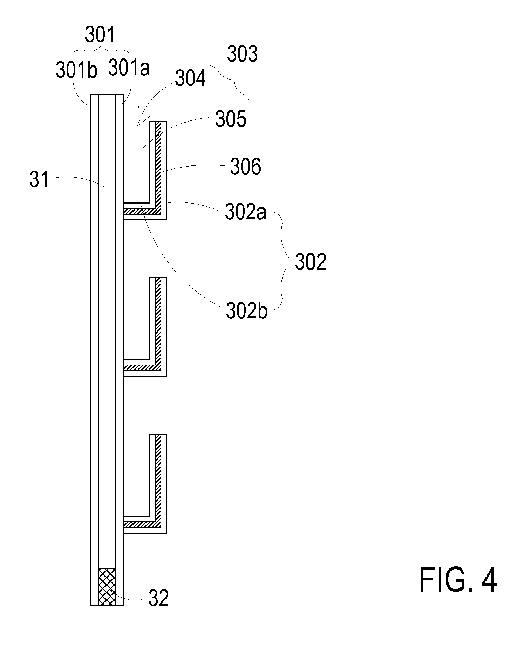

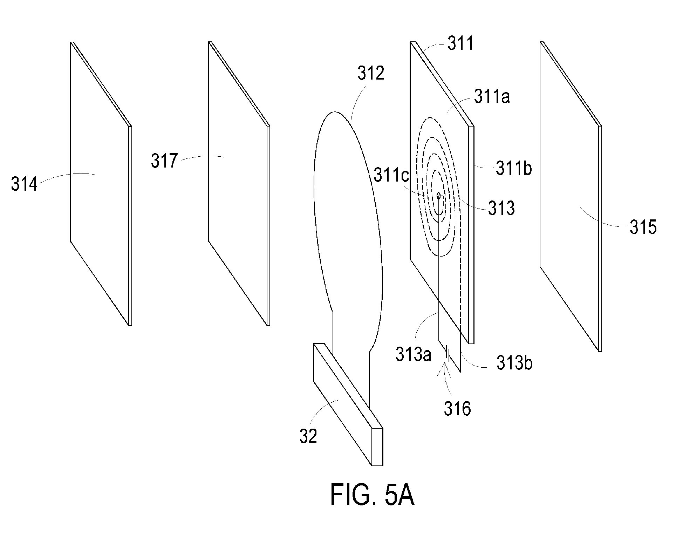

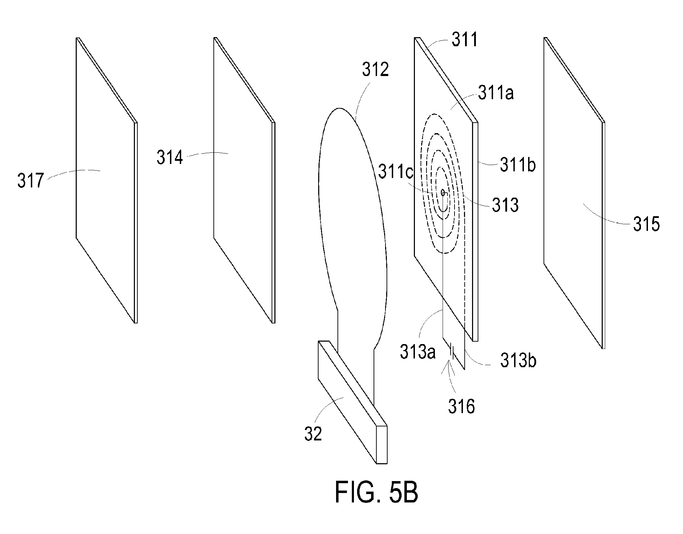

FIG. 4 is a schematic cross-sectional view illustrating the hanging-type flexible wireless charging device of FIG. 3A and taken along the line AA. FIG. 5A is a schematic exploded view illustrating an exemplary thin-film transmitter coil assembly of the hanging-type flexible wireless charging device of FIG. 4. FIG. 5B is a schematic exploded view illustrating another exemplary thin-film transmitter coil assembly of the hanging-type flexible wireless charging device of FIG. 4.

Please refer to FIGS. 2A, 2B, 3A, 4, 5A and 5B. The wireless charging system 2 comprises a hanging-type flexible wireless charging device 3 (also referred as a wireless charging device) and at least one power-receiving device 4. The wireless charging device 3 is connected with a power source 5. For example, the power source 5 is an AC utility power source, an external battery or a built-in battery. The wireless charging device 3 emits an electromagnetic wave with a specified frequency (i.e., a single frequency) or a wideband frequency (e.g., plural frequencies). For example, the frequency of the electromagnetic wave is in the range between 60Hz and 300GHz. Consequently, by a magnetic induction technology (low frequency) or a magnetic resonance technology (high frequency), the wireless charging device 3 can wirelessly charge one or more power-receiving devices 4 through the electromagnetic wave with identical or different frequencies. For example, the power-receiving device 4 is a mobile phone, a tablet computer or an electrical product.

In this embodiment, the wireless charging device 3 comprises a flexible carrier member 30, at least one thin-film transmitter coil assembly 31, at least one transmitter module 32 and a hanging element 33. The flexible carrier member 30 comprises a main carrier part 301 and plural sub-carrier parts 302. The at least one thin-film transmitter coil assembly 31 is disposed within the main carrier part 301 and electrically connected with the corresponding transmitter module 32. The thin-film transmitter coil assembly 31 is used as a transmitter terminal of the wireless charging device 3. The transmitter module 32 is disposed within the main carrier part 301, and electrically connected between the power source 5 and the corresponding thin-film transmitter coil assembly 31. Moreover, the transmitter module 32 receives the electric energy from the power source 5 and generates an AC signal to the corresponding thin-film transmitter coil assembly 31. The plural sub-carrier parts 302 are connected with the main carrier part 301. Consequently, plural pockets 303 are defined by the main carrier part 301 and the plural sub-carrier parts 302 collaboratively. Each pocket 303 has an entrance 304 and an accommodation space 305. The accommodation space 305 is used as a charging zone. Moreover, the accommodation space 305 can accommodate one or plural power-receiving devices 4. The hanging element 33 is connected with the main carrier part 301. Through the hanging element 33, the flexible carrier member 30 can be hung on an object (e.g., a hook or a rivet on a wall). An example of the hanging element 33 includes but is not limited to a perforation, a hanging ring, a hanging hook or a hanging rope.

In the embodiment as shown in FIG. 3A, the flexible carrier member 30 is a wall mat. The main carrier part 301 and the plural sub-carrier parts 302 are made of flexible cloth. Consequently, the flexible carrier member 30 is retractable and storable. Since the flexible carrier member 30 can be easily stored and carried, the convenience of using the flexible carrier member 30 is enhanced. In the embodiment as shown in FIG. 3B, the flexible carrier member 30 is a waist bag, a belt bag or a handbag to be hung on the user's body or carried by the user wherever the user is. Consequently, the wireless charging operation can be performed instantly. It is noted that the type and shape of the flexible carrier member 30 may be varied according to the practical requirements.

In the embodiment as shown in FIG. 2A, the wireless charging device 3 comprises a thin-film transmitter coil assembly 31 and a transmitter module 32. Consequently, the wireless charging device 3 emits the electromagnetic wave with a specified frequency in order to wirelessly charge the power-receiving device 4. In the embodiment as shown in FIG. 2B, the wireless charging device 3 comprises plural thin-film transmitter coil assemblies 31 and plural transmitter modules 32. The thin-film transmitter coil assemblies 31 are electrically connected with the corresponding transmitter modules 32. Consequently, the wireless charging device 3 emits the electromagnetic wave with the specified frequency or the plural frequencies in order to wirelessly charge one or plural power-receiving devices 4 at the same time or at different times. In this embodiment, the at least one transmitter module 32 is disposed on a circuit board 6.

Please refer to FIGS. 3A, 4, 5A and 5B again. The main carrier part 301 of the flexible carrier member 30 comprises a surface layer 301a and a bottom layer 301b. The surface layer 301a and the bottom layer 301b are opposed to each other. The plural sub-carrier parts 302 are connected with the surface layer 301a of the main carrier part 301. Preferably but not exclusively, the plural sub-carrier parts 302 are fixed on the main carrier part 301 by a stitching means or a hot melting means. Consequently, the plural pockets 303 are defined by the main carrier part 301 and the plural sub-carrier parts 302 collaboratively. Each pocket 303 has the entrance 304 and the accommodation space 305. The accommodation space 305 is defined by the corresponding sub-carrier part 302 and the main carrier part 301. The size of each accommodation space 305 is determined according to the size of the sub-carrier part 302 and the size of an area wherein the sub-carrier part 302 is stitched on the main carrier part 301. In the embodiment as shown in FIG. 3A, the flexible carrier member 30 of the wireless charging device 3 comprises the main carrier part 301 and three sub-carrier parts 302. The three sub-carrier parts 302 are fixed on the main carrier part 301 by stitching means or hot melting means. Consequently, three rows of pockets 303 are formed. The first row includes four pockets 303, the second row includes four pockets 303, and the third row includes two pockets 303. In other words, the wireless charging device 3 comprises ten pockets 303 capable of accommodating at least ten power-receiving devices 4 in the accommodation space 305 thereof for wirelessly charging the power-receiving devices 4. It is noted that the number and shapes of the pockets 303 may be varied according to practical requirements.

In this embodiment, the wireless charging device 3 further comprises at least one indicating unit 34 and a switch unit 35. The indicating unit 34 and the switch unit 35 are disposed on the flexible carrier member 30. For example, the indicating unit 34 is a prompt lamp for emitting different color lights to indicate an operating status of the wireless charging device 3. For example, the operating status of the wireless charging device 3 includes but is not limited to a charge off status, a charging status or a fully-charged status. By manually adjusting the switch unit 35, the wireless charging operation of the wireless charging device 3 is selectively enabled or disabled. Optionally, the wireless charging device 3 further comprises at least one locking element 39. The locking element 39 is located near the entrance 304 of the corresponding pocket 303. Moreover, the locking element 39 is connected with the main carrier part 301 and the corresponding sub-carrier part 302. After the entrance 304 of the pocket 303 is locked by the locking element 39, the power-receiving device 4 within the pocket 303 will not fall down to the floor. An example of the locking element 39 includes a strap-like or sheet-like fastener or a zipper.

As shown in FIG. 4, the thin-film transmitter coil assembly 31 is arranged between the surface layer 301a and the bottom layer 301b of the main carrier part 301. Consequently, the power-receiving device 4 within the accommodation space 305 can by wirelessly charged by the thin-film transmitter coil assembly 31 of the wireless charging device 3 according to magnetic resonance or magnetic induction. The transmitter module 32 is electrically connected with the corresponding thin-film transmitter coil assembly 31, and arranged between the surface layer 301a and the bottom layer 301b of the main carrier part 301. Preferably, the transmitter module 32 is located near an edge of the main carrier part 301, and the transmitter module 32 is not covered by the sub-carrier parts 302.

Please refer to FIGS. 5A and 5B. In this embodiment, the thin-film transmitter coil assembly 31 of the wireless charging device 3 comprises a flexible substrate 311, an oscillation starting antenna 312, a resonant antenna 313, a first protective layer 314 and a second protective layer 315. The oscillation starting antenna 312 and the resonant antenna 313 are disposed on two opposite surfaces of the flexible substrate 311. In particular, the oscillation starting antenna 312 is disposed on a first surface 311a of the flexible substrate 311, and the resonant antenna 313 is disposed on a second surface 311b of the flexible substrate 311. Moreover, one or more capacitors 316 are connected between a first end 313a and a second end 313b of the resonant antenna 313. The both ends of the oscillation starting antenna 312 are connected with the transmitter module 32. In this embodiment, a greater portion of the resonant antenna 313 is disposed on the second surface 311b of the flexible substrate 311, and the first end 313a of the resonant antenna 313 is penetrated through a perforation 311c of the flexible substrate 311 and projected out through the first surface 311a. The oscillation starting antenna 312 and the resonant antenna 313 are covered by the first protective layer 314 and the second protective layer 315, respectively. That is, the first protective layer 314 and the second protective layer 315 are located at the outer sides of the oscillation starting antenna 312 and the resonant antenna 313, respectively. Moreover, the first protective layer 314 and the second protective layer 315 are located near the bottom layer 301b and the surface layer 301a, respectively. When an AC signal from the transmitter module 32 is received by the oscillation starting antenna 312 of the thin-film transmitter coil assembly 31, a coupling effect of the oscillation starting antenna 312 and the resonant antenna 313 occurs. Consequently, the electromagnetic wave with the specified frequency and a thin-film receiver coil assembly 41 of a wireless receiving unit 4a of the corresponding power-receiving device 4 (see FIGS. 2A and 2B) result in a coupling effect. In response to the coupling effect, the electric energy from the wireless charging device 3 is received by the thin-film receiver coil assembly 41 according to magnetic resonance or magnetic induction. The received electric energy is further converted into an output voltage by a receiver module 42. The output voltage is transmitted to a load 4b so as to wireless charge the power-receiving device 4. In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes.

The thin-film transmitter coil assembly 31 further comprises a shielding structure 317. As shown in FIG. 5A, the shielding structure 317 is arranged between the oscillation starting antenna 312 and the first protective layer 314. The shielding structure 317 is used for blocking divergence of the electromagnetic wave toward the bottom layer 301b of the main carrier part 301. Consequently, the efficacy of the electromagnetic wave is enhanced. As shown in FIG. 5B, the shielding structure 317 is located at an outer side of the first protective layer 314. Similarly, the shielding structure 317 is used for blocking divergence of the electromagnetic wave toward the bottom layer 301b of the main carrier part 301. Consequently, the efficacy of the electromagnetic wave is enhanced. Moreover, as shown in FIG. 4, each sub-carrier part 302 comprises an outer layer 302a and an inner layer 302b. Another shielding structure 306 is disposed within the sub-carrier part 302, i.e., arranged between the outer layer 302a and the inner layer 302b. The shielding structure 306 is used for blocking divergence of the electromagnetic wave toward the outer layer 302a of the sub-carrier part 302 and increasing the gain of the electromagnetic wave.

In some embodiments, a first adhesive layer and a second adhesive layer (not shown) are disposed on the first surface 311a and the second surface 311b of the flexible substrate 311, respectively. The oscillation starting antenna 312 and the resonant antenna 313 are made of electrically-conductive material. Moreover, the oscillation starting antenna 312 and the resonant antenna 313 are respectively fixed on the first surface 311a and the second surface 311b of the flexible substrate 311 through the corresponding adhesive layers. Each of the first adhesive layer and the second adhesive layer is made of light curable adhesive material, thermally curable adhesive material or any other appropriate curable adhesive material (e.g., vinyl acetate-ethylene copolymer gel, polyimide gel, rubbery gel, polyolefin gel or moisture curable polyurethane gel). In some other embodiments, the adhesive layer contains curable adhesive material and magnetic material. Preferably but not exclusively, the magnetic material is ferromagnetic powder. Alternatively, in some other embodiments, the flexible substrate 311 is replaced by the adhesive layers.

Preferably but not exclusively, the flexible substrate 311 is made of polyethylene terephthalate (PET), thin glass, polyethylennaphthalat (PEN), polyethersulfone (PES), polymethylmethacrylate (PMMA), polyimide (PI) or polycarbonate (PC). In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes. The electrically-conductive material of the oscillation starting antenna 312 and the resonant antenna 313 includes but is not limited to silver (Ag), copper (Cu), gold (Au), aluminum (Al), tin (Sn) or graphene. Moreover, each of the first protective layer 314 and the second protective layer 315 is made of protective paint. An example of the protective paint includes but is not limited to epoxy resin, acrylic silicone, polyurethane rubber, vinyl acetate-ethylene copolymer gel, polyimide gel, rubbery gel, polyolefin gel or moisture curable polyurethane gel.

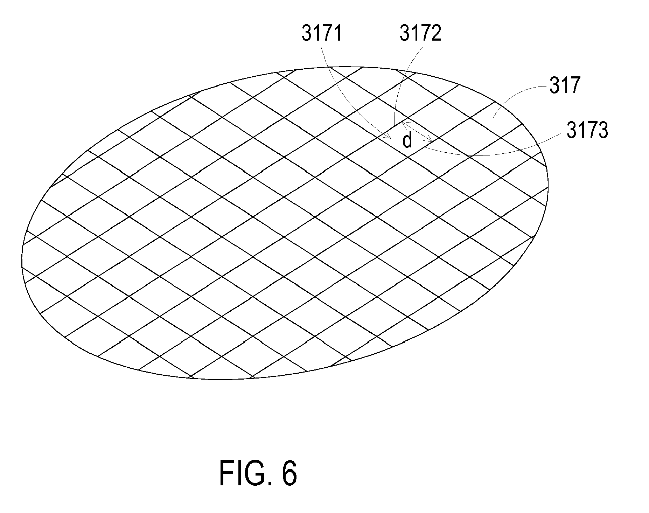

FIG. 6 schematically illustrates an example of the shielding structure of the wireless charging device as shown in FIG. 5A. In the embodiment as shown in FIG. 6, the shielding structure 317 is a metal mesh for blocking the divergence of the electromagnetic wave with a higher frequency (e.g., with the frequency higher than 6 MHz) toward the bottom layer 301b of the main carrier part 301 and enhancing the efficacy of the electromagnetic wave. The metal mesh is made of metallic material or metallic composite material selected from copper, gold, silver, aluminum, tungsten, chromium, titanium, indium, tin, nickel, iron, or a combination thereof. The pattern of the metal mesh comprises plural mesh units 3171. Every two adjacent metal lines 3172 and 3173 of the mesh unit 3171 that are not crisscrossed with each other are separated by a distance d. The distance d is shorter than a wavelength of the electromagnetic wave from the thin-film transmitter coil assembly 31. In some other embodiments, the shielding structure 317 is a magnetically-permeable film for blocking the divergence of the electromagnetic wave with a lower frequency (e.g., in the range between 60Hz and 20MHz) toward the bottom layer 301b of the main carrier part 301 and enhancing the efficacy of the electromagnetic wave. The magnetically-permeable film is made of a mixture of ferrite, zinc-nickel ferrite, zinc-manganese ferrite or iron-silicon-aluminum alloy and adhesive material. In another embodiment, the shielding structure 317 is a composite film for blocking the divergence of the electromagnetic wave with the wideband frequency (e.g., in the range between 60Hz and 300GHz) toward the bottom layer 301b of the main carrier part 301 and enhancing the efficacy of the electromagnetic wave. For example, the composite film is a combination of a metal mesh and a magnetically-permeable film. The structures, materials and functions of the shielding structure 306 of the sub-carrier part 302 are similar to those of the shielding structure 317, and are not redundantly described herein. Optionally, another shielding structure (not shown) is disposed within the locking element 39 for blocking the divergence of the electromagnetic wave toward the entrance 304 of the pocket 303. The structures, materials and functions of the shielding structure of the locking element 39 are similar to those of the shielding structure 317, and are not redundantly described herein.

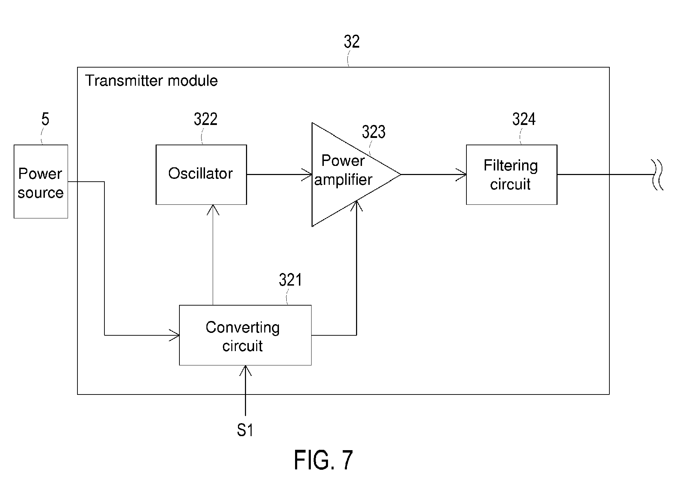

FIG. 7 is a schematic circuit block diagram illustrating a transmitter module of the hanging-type flexible wireless charging device of FIG. 3A. In an embodiment, the wireless charging device 3 comprises one or plural transmitter modules 32. Each transmitter module 32 is electrically connected with the corresponding thin-film transmitter coil assembly 31. Moreover, each transmitter module 32 comprises a converting circuit 321, an oscillator 322, a power amplifier 323 and a filtering circuit 324. The input end of the converting circuit 321 is electrically connected with the power source 5. The output end of the converting circuit 321 is electrically connected with the oscillator 322 and the power amplifier 323. The converting circuit 321 is used for converting the electric energy from the power source 5 and providing the regulated voltage to the oscillator 322 and the power amplifier 323. For example, the converting circuit 321 comprises a DC-to-DC converter, an AC-to-AC converter and/or a DC-to-AC convertor. The oscillator 322 is used for adjustably outputting an AC signal with a specified frequency. The AC signal with the specified frequency is amplified by the power amplifier 323. The resonant wave and the undesired frequency of the AC signal are filtered by the filtering circuit 324. The filtered AC signal is transmitted to the oscillation starting antenna 312 of the thin-film transmitter coil assembly 31.

Please refer to FIGS. 2A and 2B again. In this embodiment, each power-receiving device 4 comprises the wireless receiving unit 4a and the load 4b. The wireless receiving unit 4a and the load 4b are separate components or integrated into a single component. For example, the wireless receiving unit 4a is a wireless receiver pad, and the load 4b is a mobile phone without the function of being wirelessly charged. However, after the wireless receiver pad and the mobile phone are electrically connected with each other, the mobile phone can be wireless charged. Alternatively, in another embodiment, the wireless receiving unit 4a is disposed within a casing of the load 4b (e.g., the mobile phone).

The wireless receiving unit 4a of each power-receiving device 4 comprises the thin-film receiver coil assembly 41 and the receiver module 42. Like the thin-film transmitter coil assembly 31, the thin-film receiver coil assembly 41 comprises a flexible substrate, an oscillation starting antenna, a resonant antenna, a first protective layer and a second protective layer. Moreover, one or more capacitors 3 are connected between two ends of the resonant antenna. The structures, materials and functions of the flexible substrate, the oscillation starting antenna, the resonant antenna, the first protective layer and the second protective layer of the thin-film receiver coil assembly 41 are similar to those of the flexible substrate, the oscillation starting antenna, the resonant antenna, the first protective layer and the second protective layer of the thin-film transmitter coil assembly 31 as shown in FIGS. 5A and 5B, and are not redundantly described herein. Due to the coupling effect between the thin-film receiver coil assembly 41 and the thin-film transmitter coil assembly 31, the electric energy from the thin-film transmitter coil assembly 31 of the wireless charging device 3 can be received by the thin-film receiver coil assembly 41 according to magnetic resonance or magnetic induction. Consequently, when the power-receiving device 4 is disposed within the accommodation space 305 of the wireless charging device 3, if a higher frequency (e.g., 6.78MHz) of the electromagnetic wave emitted by the thin-film transmitter coil assembly 31 of the wireless charging device 3 and the frequency of the thin-film receiver coil assembly 41 of the power-receiving device 4 are identical, the electric energy can be transmitted from the thin-film transmitter coil assembly 31 of the wireless charging device 3 to the thin-film receiver coil assembly 41 of the wireless receiving unit 4a according to magnetic resonance. Alternatively, when the power-receiving device 4 is disposed within the accommodation space 305 of the wireless charging device 3, if a lower frequency (e.g., 100KHz) of the electromagnetic wave emitted by the thin-film transmitter coil assembly 31 of the wireless charging device 3 and the frequency of the thin-film receiver coil assembly 41 of the power-receiving device 4 are identical, the electric energy can be transmitted from the thin-film transmitter coil assembly 31 of the wireless charging device 3 to the thin-film receiver coil assembly 41 of the wireless receiving unit 4a according to magnetic induction.

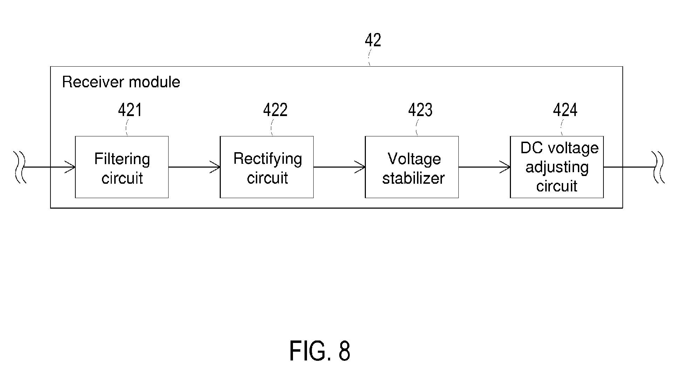

FIG. 8 is a schematic circuit block diagram illustrating a receiver module of the power-receiving device of FIGS. 2A and 2B. Please refer to FIGS. 2A, 2B and 8. The wireless receiving unit 4a comprises at least one receiver module 42. Each receiver module 42 comprises a filtering circuit 421, a rectifying circuit 422, a voltage stabilizer 423 and a DC voltage adjusting circuit 424. The filtering circuit 421 is electrically connected with the resonant antenna of the thin-film receiver coil assembly 41. The resonant wave of the AC signal from the thin-film receiver coil assembly 41 is filtered by the filtering circuit 421. The rectifying circuit 422 is electrically connected with the filtering circuit 421 and the voltage stabilizer 423 for converting the AC signal into a rectified DC voltage. The voltage stabilizer 423 is electrically connected with the rectifying circuit 422 and the DC voltage adjusting circuit 424 for stabilizing the rectified DC voltage to a stabilized DC voltage with a rated voltage value. The DC voltage adjusting circuit 424 is electrically connected with the voltage stabilizer 423 and the load 4b for adjusting (e.g., increasing) the stabilized DC voltage to a regulated DC voltage. The regulated DC voltage is provided to the load 4b to charge the load 4b (e.g., the battery of the mobile phone).

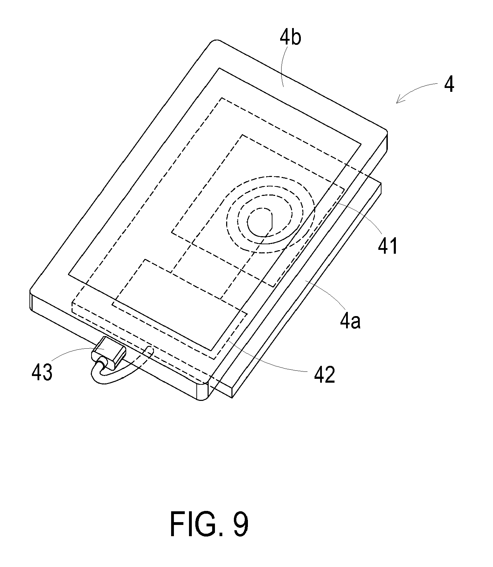

FIG. 9 is a schematic perspective view illustrating the appearance of a power-receiving device of FIGS. 2A and 2B. Please refer to FIGS. 2A, 2B and 9. The power-receiving device 4 comprises the wireless receiving unit 4a and the load 4b. In this embodiment, the wireless receiving unit 4a of the power-receiving device 4 is a wireless receiver pad, and the load 4b is a mobile phone without the function of being wirelessly charged. When a connector 43 of the wireless receiving unit 4a (i.e., the wireless receiver pad) is electrically connected with a corresponding connector of the load 4b (i.e., the mobile phone), the electric energy from the thin-film transmitter coil assembly 31 of the wireless charging device 3 can be received by the thin-film receiver coil assembly 41 and the receiver module 42 of the wireless receiving unit 4a. Under this circumstance, even if the mobile phone does not have the function of being wirelessly charged, the mobile phone can be wirelessly charged by the wireless charging device 3 through the wireless receiving unit 4a.

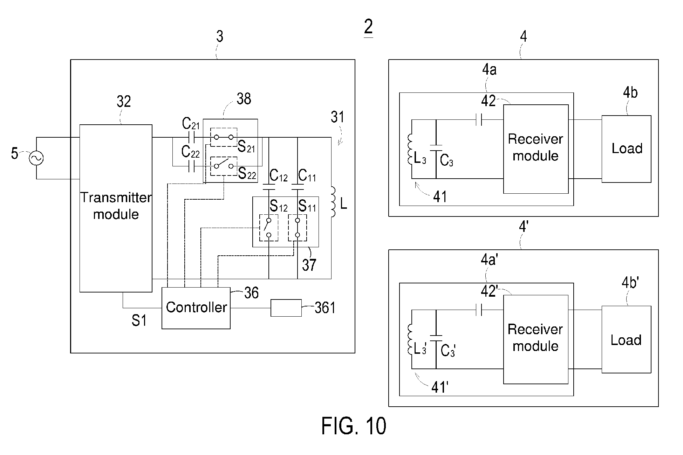

FIG. 10 is a schematic circuit block diagram illustrating the architecture of the wireless charging system according to another embodiment of the present invention. In this embodiment, the wireless charging system 2 comprise a wireless charging device 3 and two power-receiving devices 4 and 4'. The power-receiving device 4 comprises a wireless receiving unit 4a, and the power-receiving device 4' comprises a wireless receiving unit 4a'. According to the specifications and features of the wireless receiving units 4a and 4a', the wireless charging device 3 can adaptively or selectively charge the load 4b and 4b' of the power-receiving devices 4 and 4' by means of magnetic resonance or magnetic induction. In this embodiment, the wireless charging device 3 comprises a thin-film transmitter coil assembly 31, a transmitter module 32, a controller 36, a first switching circuit 37, a second switching circuit 38, two first capacitors C11, C12 and two second capacitors C21, C22. The structures, functions and principles of the thin-film transmitter coil assembly 31 and the transmitter module 32 are similar to those mentioned above, and are not redundantly described herein. The structures, functions and principles of the receiver coil assemblies 41, 41' and the receiver modules 42, 42' are similar to those mentioned above, and are not redundantly described herein. The first capacitors C11 and C12 are connected with the oscillation starting antenna (not shown) of the thin-film transmitter coil assembly 31 in parallel. Moreover, the first capacitors C11 and C12 are connected with each other in parallel so as to be inductively coupled with the receiver coil assemblies 41 and 41' of the power-receiving devices 4 and 4'. The second capacitors C21 and C22 are connected with the output terminal of the transmitter module 32 and the oscillation starting antenna (not shown) of the thin-film transmitter coil assembly 31 in series. Moreover, the second capacitors C21 and C22 are connected with each other in parallel so as to be inductively coupled with the transmitter module 32. Consequently, the second capacitors C21 and C22 can filter the signal and increase the charging performance. The first switching circuit 37 comprises two first switching elements S11 and S12. The first switching elements S11 and S12 are connected with the corresponding first capacitors C11 and C12 in series, respectively. The second switching circuit 38 comprises two second switching elements S21 and S22. The second switching elements S21 and S22 are connected with the corresponding second capacitors C21 and C22 in series, respectively. The controller 36 is electrically connected with the first switching elements S11 and S12 of the first switching circuit 37 and the second switching elements S21 and S22 of the second switching circuit 38. According to a sensing signal from the wireless receiving units 4a and 4a' of the power-receiving devices 4 and 4' based on the adapted wireless charging technology, the controller 36 generates a control signal. According to the control signal, the first switching elements S11 and S12 of the first switching circuit 37 and the second switching elements S21 and S22 of the second switching circuit 38 are selectively turned on or turned off. Consequently, the wireless charging device 3 can adaptively or selectively charge the load 4b and 4b' of the power-receiving devices 4 and 4' by means of magnetic resonance or magnetic induction according to the specifications and features of the wireless receiving units 4a and 4a'.

The working frequencies of the wireless charging device 3 and the power-receiving devices 4 and 4' can be calculated according to the formula: fa = 1/[(2π)×(LaCa)^{1/2}] = 1/[(2π)×(LbCb)^{1/2}] = fb. In this formula, fa is the working frequency of the wireless charging device 3, fb is the working frequency of the power-receiving device 4 or 4', Ca is the capacitance value of the first capacitor C11 or C12, La is the inductance value of the oscillation starting antenna of the thin-film transmitter coil assembly 31, Cb is the capacitance value of the third capacitor C3 or C3' of the power-receiving device 4 or 4', and Lb is the inductance value of the oscillation starting antenna of the thin-film receiver coil assembly 41 or 41'. For example, the capacitance values of the first capacitors C11 and C12 are respectively 0.5µF and 0.1nF, and the inductance value L of the oscillation starting antenna of the thin-film transmitter coil assembly 31 is 5µH. If the capacitance value of the third capacitor C3 of the power-receiving device 4 is 0.5µF and the inductance value L3 of the oscillation starting antenna of the thin-film receiver coil assembly 41 is 5µH, the controller 36 of the wireless charging device 3 issues a corresponding control signal to the first switching circuit 37 and the second switching circuit 38. According to this control signal, the first switching element S11 and the second switching element S21 are turned on, and the first switching element S12 and the second switching element S22 are turned off. Consequently, the first capacitor C11 with the capacitance value of 0.5µF is selected by the wireless charging device 3 and the inductance value of the oscillation starting antenna of the thin-film transmitter coil assembly 31 is 5µH. Under this circumstance, the working frequency of the wireless charging device 3 and the working frequency of the wireless receiving unit 4a of the power-receiving device 4 are both 100 KHz. Consequently, the wireless receiving unit 4a of the power-receiving device 4 is wirelessly charged by the wireless charging device 3 at the lower frequency according to magnetic induction. Whereas, if the capacitance value of the third capacitor C3' of the power-receiving device 4' is 0.1nF and the inductance value L3' of the oscillation starting antenna of the thin-film receiver coil assembly 41' is 5µH, the controller 36 of the wireless charging device 3 issues a corresponding control signal to the first switching circuit 37 and the second switching circuit 38. According to this control signal, the first switching element S12 and the second switching element S22 are turned on, and the first switching element S11 and the second switching element S21 are turned off. Consequently, the first capacitor C12 with the capacitance value of 0.1nF is selected by the wireless charging device 3 and the inductance value of the oscillation starting antenna of the thin-film transmitter coil assembly 31 is 5µH. Under this circumstance, the working frequency of the wireless charging device 3 and the working frequency of the wireless receiving unit 4a' of the power-receiving device 4' are both 6.78MHz. Consequently, the wireless receiving unit 4a' of the power-receiving device 4' is wirelessly charged by the wireless charging device 3 at the higher frequency according to magnetic resonance. The working frequency is presented herein for purpose of illustration and description only.

Please refer to FIGS. 3A, 7 and 10. Optionally, the wireless charging device 3 further comprises at least one sensing element 361. The sensing element 361 is disposed within the main carrier part 301 or the sub-carrier part 302, and located near the pocket 303. The sensing element 361 is electrically connected with the controller 36 for sensing whether the entrance 304 of the pocket 303 is locked by the locking element 39. Moreover, according the result of detecting whether the entrance 304 of the pocket 303 is locked by the locking element 39, a sensing signal is issued from the sensing element 361 to the controller 36. According to the sensing signal, the controller 36 issues a control signal S1 to the converting circuit 321 of the transmitter module 32 so as to control the on/off statuses of the transmitter module 32. For example, after the power-receiving device 4 is disposed within the accommodation space 305 of the pocket 303 and the entrance 304 of the pocket 303 is locked by the locking element 39, the operations of the sensing element 361 and the controller 36 will control the wireless charging device 3 to wirelessly charge the power-receiving device 4 within the pocket 303 automatically.

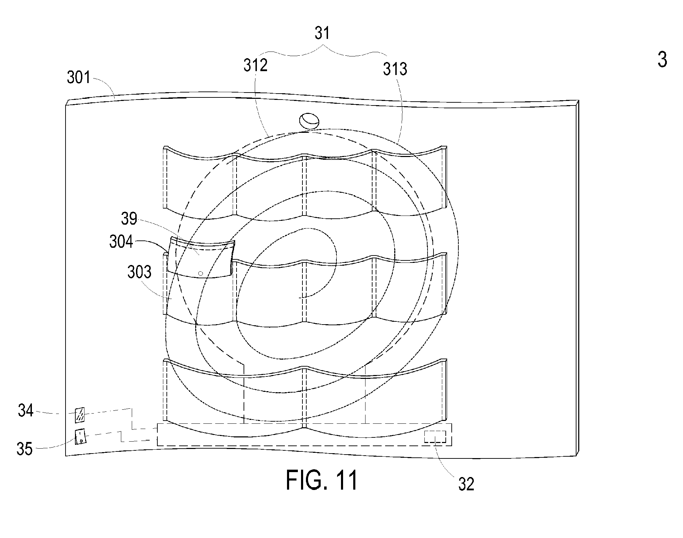

FIG. 11 is a schematic circuit block diagram illustrating an exemplary configuration of the antennas of the hanging-type flexible wireless charging device of FIG. 3A. As shown in FIG. 11, one thin-film transmitter coil assembly 31 is disposed within the main carrier part 301 of the wireless charging device 3. The thin-film transmitter coil assembly 31 comprises an oscillation starting antenna 312 and a resonant antenna 313. The oscillation starting antenna 312 and the resonant antenna 313 are partially overlapped with the plural pockets 303. The transmitter module 32 is disposed within the main carrier part 301, and located near an edge of the main carrier part 301. In this embodiment, the wireless charging device 3 comprises one indicating unit 34 and one switch unit 35. The indicating unit 34 and the switch unit 35 are disposed on the surface layer 301a of the main carrier part 301, and located near an edge of the main carrier part 301. For example, the indicating unit 34 is a prompt lamp for emitting different color lights to indicate an operating status of the wireless charging device 3. For example, the operating status of the wireless charging device 3 includes but is not limited to a charge off status, a charging status or a fully-charged status. By manually adjusting the switch unit 35, the wireless charging operation of the wireless charging device 3 is selectively enabled or disabled. Optionally, the wireless charging device 3 further comprises at least one locking element 39. The locking element 39 is located near the entrance 304 of the corresponding pocket 303. Moreover, the locking element 39 is connected with the main carrier part 301 and the corresponding sub-carrier part 302. After the entrance 304 of the pocket 303 is locked by the locking element 39, the power-receiving device 4 within the pocket 303 will not fall down to the floor. An example of the locking element 39 includes a strap-like or sheet-like fastener or a zipper.

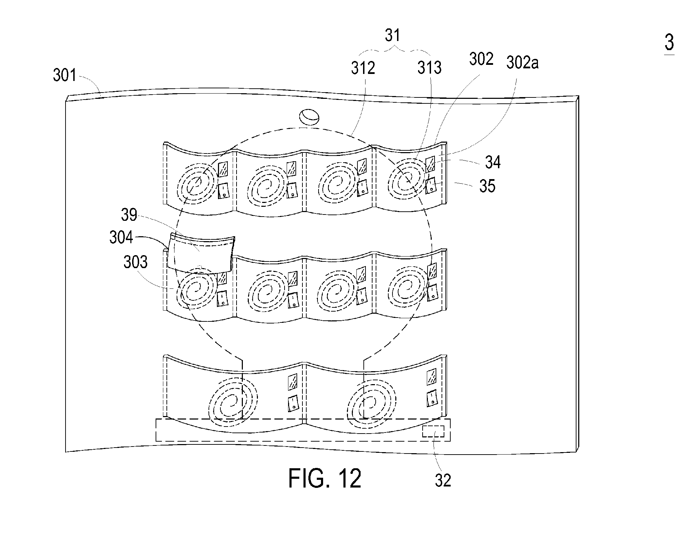

FIG. 12 is a schematic circuit block diagram illustrating another exemplary configuration of the antennas of the hanging-type flexible wireless charging device of

FIG. 3A. As shown in FIG. 12, one thin-film transmitter coil assembly 31 is disposed within the main carrier part 301 of the wireless charging device 3. The thin-film transmitter coil assembly 31 comprises one oscillation starting antenna 312 and plural resonant antennas 313. The plural resonant antennas 313 are overlapped with the corresponding pockets 303. The transmitter module 32 is disposed within the main carrier part 301, and located near an edge of the main carrier part 301. In this embodiment, the wireless charging device 3 comprises plural indicating units 34 and plural switch units 35. The plural indicating units 34 are disposed on the outer layers 302a of the corresponding sub-carrier parts 302 for indicating the charging statuses of the corresponding power-receiving devices 4 within the corresponding pockets 303. The plural switch units 35 are disposed on the outer layers 302a of the corresponding sub-carrier parts 302 for controlling the charging operations in the charging zones of the corresponding pockets 303.

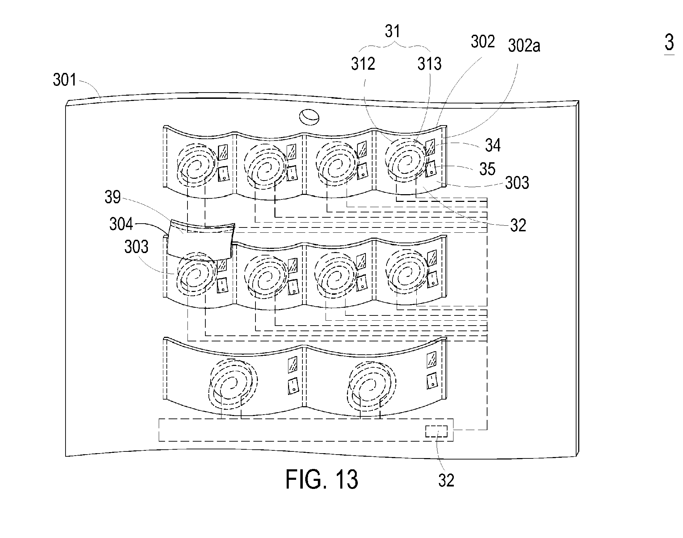

FIG. 13 is a schematic circuit block diagram illustrating a further exemplary configuration of the antennas of the hanging-type flexible wireless charging device of

FIG. 3A. As shown in FIG. 13, plural thin-film transmitter coil assemblies 31 are disposed within the main carrier part 301 of the wireless charging device 3. The plural thin-film transmitter coil assemblies 31 are overlapped with the corresponding pockets 303. Moreover, each thin-film transmitter coil assembly 31 comprises an oscillation starting antenna 312 and a resonant antenna 313. The transmitter module 32 is disposed within the main carrier part 301, and located near an edge of the main carrier part 301. In this embodiment, the wireless charging device 3 comprises plural indicating units 34 and plural switch units 35. The plural indicating units 34 are disposed on the outer layers 302a of the corresponding sub-carrier parts 302 for indicating the charging statuses of the corresponding power-receiving devices 4 within the corresponding pockets 303. The plural switch units 35 are disposed on the outer layers 302a of the corresponding sub-carrier parts 302 for controlling the charging operations in the charging zones of the corresponding pockets 303.

From the above descriptions, the present invention provides a hanging-type flexible wireless charging device. The structure of the hanging-type flexible wireless charging device is flexible and slim. The wireless charging device can wirelessly charge the power-receiving devices according to magnetic resonance or magnetic induction. Moreover, the flexible carrier member is retractable and storable. Since the flexible carrier member can be easily stored and carried, the convenience of using the flexible carrier member is enhanced and the layout space is saved. Moreover, the hanging-type flexible wireless charging device of the present invention can emit an electromagnetic wave with at least one frequency so as to wirelessly charge at least one power-receiving device at the same time or at different times. Moreover, the hanging-type flexible wireless charging device can adaptively or selectively charge the at least one power-receiving device according to magnetic resonance or magnetic induction.

## Claims

1. A wireless charging device (3), comprising:
a flexible carrier member (30) comprising a main carrier part (301) and at least one sub-carrier part (302), wherein the at least one sub-carrier part (302) is connected with the main carrier part (301), so that at least one pocket (303) is defined by the main carrier part (301) and the at least one sub-carrier part (302) collaboratively, wherein each pocket (303) has an entrance (304) and an accommodation space (305);
at least one thin-film transmitter coil assembly (31) disposed within the main carrier part (301), and emitting an electromagnetic wave with at least one specified frequency for wirelessly charging at least one power-receiving device (4, 4') within the accommodation space (305) of the pocket (303); and
a hanging element (33) connected with the main carrier part (301), wherein the flexible carrier member (30) is hung on an object through the hanging element (33).

2. The wireless charging device (3) according to claim 1, wherein the main carrier part (301) comprises a surface layer (301a) and a bottom layer (301b), wherein the at least one thin-film transmitter coil assembly (31) is arranged between the surface layer (301a) and the bottom layer (301b) of the main carrier part (301), wherein the at least one sub-carrier part (302) is connected with the surface layer (301a) of the main carrier part (301).

3. The wireless charging device (3) according to claim 1 or 2, wherein each thin-film transmitter coil assembly (31) comprises:
a flexible substrate (311) having a first surface (311a) and a second surface (311b), wherein the first surface (311a) and the second surface (311b) are opposed to each other;
at least one oscillation starting antenna (312) disposed on the first surface (311a) of the flexible substrate (311); and
at least one resonant antenna (313) disposed on the second surface (311b) of the flexible substrate (311), wherein at least one capacitor (316) is connected between a first end (313a) and a second end (313b) of each resonant antenna (313), wherein the electromagnetic wave with one of the at least one specified frequency is emitted in response to a coupling effect of the resonant antenna (313) and the oscillation starting antenna (312).

4. The wireless charging device (3) according to any of the claims 1 to 3, wherein the transmitter coil assembly (31) further comprises a first protective layer (314) covering the oscillation starting antenna (312) and a second protective layer (315) covering the resonant antenna (313), wherein the transmitter coil assembly (31) further comprises a shielding structure (317) for blocking divergence of the electromagnetic wave, wherein the shielding structure (317) is arranged between the oscillation starting antenna (312) and the first protective layer (314), or located at an outer side of the first protective layer (314), wherein the shielding structure (317) comprises a metal mesh, a magnetically-permeable film, or a combination of the metal mesh and the magnetically-permeable film.

5. The wireless charging device (3) according to any of the claims 1 to 4, wherein the at least one sub-carrier part (302) comprises plural sub-carrier parts (302), wherein the plural sub-carrier parts (302) are connected with the main carrier part (301), so that plural pockets (303) are defined by the main carrier part (301) and the plural sub-carrier parts (302) collaboratively.

6. The wireless charging device (3) according to any of the claims 1 to 5, wherein the thin-film transmitter coil assembly (31) comprises one oscillation starting antenna (312) and one resonant antenna (313), which are partially overlapped with the plural pockets (303).

7. The wireless charging device (3) according to any of the claims 1 to 6, wherein the thin-film transmitter coil assembly (31) comprises one oscillation starting antenna (312) and plural resonant antennas (313), wherein the plural resonant antennas (313) are partially overlapped with the corresponding pockets (303).

8. The wireless charging device (3) according to any of the claims 1 to 7, wherein the at least one thin-film transmitter coil assembly (31) comprises plural thin-film transmitter coil assemblies (31) corresponding to the plural pockets (303).

9. The wireless charging device (3) according to any of the claims 1 to 8, wherein each sub-carrier part (302) comprises an outer layer (302a), an inner layer (302b) and a shielding structure (306), wherein the shielding structure (306) is arranged between the outer layer (302a) and the inner layer (302b), wherein the shielding structure (306) comprises a metal mesh, a magnetically-permeable film, or a combination of the metal mesh and the magnetically-permeable film.

10. The wireless charging device (3) according to any of the claim 1 to 9, further comprising at least one indicating unit (34) for indicating an operating status or a charging status of the wireless charging device (3), wherein the at least one indicating unit (34) is disposed on the surface layer (301a) of the main carrier part (301) or an outer layer (302a) of the corresponding sub-carrier part (302).

11. The wireless charging device (3) according to any of the claims 1 to 10, further comprising at least one switch unit (35), wherein a function of wirelessly charging the corresponding power-receiving device (4, 4') is selectively enabled or disabled through the corresponding switch unit (35), wherein the at least one switch unit (35) is disposed on the surface layer (301a) of the main carrier part (301) or an outer layer (302a) of the corresponding sub-carrier part (302).

12. The wireless charging device (3) according to any of the claims 1 to 11, further comprising at least one locking element (39) for locking the entrance (304) of the corresponding pocket (303), wherein the at least one locking element (39) is located near the corresponding pocket (303), and connected with the main carrier part (301) and the corresponding sub-carrier part (302), wherein the locking element further comprises a shielding element.

13. The wireless charging device (3) according to any of the claims 1 to 12, further comprising:
a controller (36) for controlling operations of the wireless charging device (3); and
at least one sensing element (361) disposed within the main carrier part (301) or the corresponding sub-carrier part (302), and located near the entrance (304) of the corresponding pocket (303), wherein the at least one sensing element (361) is electrically connected with the controller (36), and issues a sensing signal according to a result of judging whether the entrance (304) of the corresponding pocket (303) is locked,
wherein the controller (36) issues a control signal to control on/off statuses of the wireless charging device (3) according to the sensing signal.

14. The wireless charging device (3) according to any of the claims 1 to 13, further comprising at least one transmitter module (32), wherein the at least one transmitter module (32) is electrically connected with the corresponding transmitter coil assembly (31) and a power source (5), wherein the transmitter module (32) receives an electric energy from the power source (5) and provides an AC signal to the corresponding transmitter coil assembly (31).

15. The wireless charging device (3) according to any of the claims 1 to 14, wherein the hanging element (33) is a perforation, a hanging ring, a hanging hook or a hanging rope.
